# EUROPÄISCHE PATENTANMELDUNG

(11) **EP 1 227 265 A2**
(43) Veröffentlichungstag der Anmeldung: **31.07.2002**
(21) Anmeldenummer: 02000479.2
(22) Anmeldetag: 08.01.2002
(51) Int. Cl.: F16H 47/02

(54) **Antriebsanordnung mit einer hydraulischen Pumpe und einem Antriebsmotor**

(30) Priorität: 30.01.2001 DE 10103978
(71) Anmelder: STILL GMBH, D-22113 Hamburg (DE)
(72) Erfinder: Mittmann, Hans-Georg, Dipl.-Ing., 21465 Wentorf (DE); Hinkelmann, Martin, Dipl.-Ing., 21039 Escheburg (DE); Wenske, Jan, Dr.-Ing., 21465 Reinbek (DE)
(74) Vertreter: Kasseckert, Rainer

(57) **Zusammenfassung**

Die Erfindung betrifft eine bevorzugt für die Hubhydraulik von Flurförderzeugen vorgesehene Antriebsanordnung mit einer hydraulischen Pumpe und einem Antriebsmotor. Um eine möglichst hohe Förderleistung bei geringer Geräuschemission und eine platzsparende Bauweise zu erzielen ist erfindungsgemäß zwischen den Antriebsmotor und die Pumpe ein Untersetzungsgetriebe geschaltet. Dieses ist bevorzugt als Stirnradgetriebe mit einem Ritzel (3) und einem damit in Eingriff stehenden Zahnrad (4) ausgebildet ist. Das Ritzel (3) ist mit einer Motorwelle (2) des Antriebsmotors und das Zahnrad (4) mit einer Pumpenwelle (6) der Pumpe verbunden. Das Ritzel (3) kann an der Motorwelle (2) angeformt sein. Es ist jedoch auch möglich, das Ritzel (3) und die Motorwelle (2) als separate Bauteile auszubilden. Das Untersetzungsgetriebe ist in ein Lagerschild (1) des Antriebsmotors integriert, das mit einer Aufnahme (1a) für einen Zentrierflansch (7) der Pumpe versehen ist.

## Beschreibung

Die Erfindung betrifft eine Antriebsanordnung mit einer hydraulischen Pumpe und einem Antriebsmotor.

Derartige Antriebsanordnungen werden beispielsweise für die Hubhydraulik von Flurförderzeugen verwendet. Dabei wird die hydraulische Pumpe mittels einer Kupplung mit dem Antriebsmotor gekoppelt. Das Pumpengehäuse wird mit dem Gehäuse des Antriebsmotors kraftschlüssig verbunden, z. B. verschraubt. Antriebsmotor und Pumpe drehen sich mit derselben Drehzahl.

Um bei möglichst kleinen Abmessungen der Pumpe eine hohe Förderleistung zu erzielen, arbeitet die Pumpe in der Regel im Bereich der maximalen Betriebsdrehzahl. Soll eine höhere Leistung erzielt werden, so wird eine größere Pumpe eingesetzt, die dann bei unverändert hohem Drehzahlniveau betrieben wird. Hierbei sind die Geräuschemissionen deutlich erhöht.

Der vorliegenden Erfindung liegt die Aufgabe zu Grunde, eine einfach aufgebaute Antriebsanordnung der eingangs genannten Art zur Verfügung zu stellen, die eine möglichst hohe Förderleistung bei geringer Geräuschemission aufweist und eine platzsparende Bauweise ermöglicht.

Diese Aufgabe wird erfindungsgemäß dadurch gelöst, dass zwischen den Antriebsmotor und die Pumpe ein Untersetzungsgetriebe geschaltet ist. Der erfindungswesentliche Gedanke besteht demnach darin, die Drehzahlen des Antriebsmotors und der Pumpe voneinander zu trennen. Es kann dabei ein Drehzahlniveau für die Pumpe gewählt werden, bei der diese eine geringe Geräuschemission hat. Um auf die gewünschte Förderleistung der Pumpe zu kommen, wird das Fördervolumen der Pumpe erhöht. Gleichzeitig kann ein Antriebsmotor mit höherer Betriebsdrehzahl verwendet werden, der aufgrund seiner höheren Leistungsdichte einen kleineren Bauraum beansprucht.

Gemäß einer vorteilhaften Ausgestaltung der Erfindung, die für einen einfachen Aufbau der Antriebsanordnung sorgt, ist das Untersetzungsgetriebe als Stirnradgetriebe mit einem Ritzel und einem damit in Eingriff stehenden Zahnrad ausgebildet, wobei das Ritzel mit einer Motorwelle des Antriebsmotors und das Zahnrad mit einer Pumpenwelle der Pumpe verbunden ist. Bei einer solchen Anordnung kann die bei den Antriebseinheiten des Standes der Technik vorgesehene Kupplung zwischen dem Antriebsmotor und der Pumpe entfallen. Anstelle einer Kupplung ist das Stirnradgetriebe zwischen den Antriebsmotor und die Pumpe geschaltet. Es ist dabei möglich, im wesentlichen mit der gleichen Anzahl von Bauteilen auszukommen.

Sofern das Ritzel an der Motorwelle angeformt ist, verringern sich die Anzahl der erforderlichen Bauteile und der Montageaufwand. Das Ritzel benötigt weder eine eigene Ritzelwelle noch eine Lagerung für die Ritzelwelle. Statt dessen dient die Motorwelle als Ritzelwelle.

Es ist jedoch auch möglich, dass das Ritzel und die Motorwelle als separate Bauteile ausgebildet sind. In diesem Fall müssen die genannten Elemente auf geeignete Weise miteinander verbunden werden. Dies kann beispielsweise dadurch erfolgen, dass die Motorwelle mit einer axialen Wellenbohrung versehen ist, in die ein axial an das Ritzel anschließender Wellenzapfen eingepresst wird. Auch hierbei werden die bereits genannten Vorteile erzielt, keine eigene Ritzelwelle samt Lagerung vorhalten zu müssen. Darüber hinaus können bei dieser Lösung verschiedene Werkstoffe für die Motorwelle und das Ritzel verwendet werden, z. B. Werkzeugstahl für die Motorwelle und ein hochfester Stahl für das Ritzel. Ferner ist die Gestaltungsfreiheit hinsichtlich der Durchmesser der Motorwelle, des Ritzels und des Lagersitzes im Lagerschild größer.

Das Zahnrad kann auf der Pumpenwelle kraft- und/oder formschlüssig befestigbar sein, z. B. mittels einer Passfeder-Verbindung. Dadurch wird keine separate Getriebewelle und Getriebewellenlagerung für das Zahnrad benötigt. Radiale und ggf. axiale Käfte (bei Schrägverzahnung), die auf das Zahnrad wirken, werden von der Lagerung der Pumpenwelle aufgenommen.

Bei erhöhten Lagerkräften kann das Zahnrad auf einer separaten, beidseitig gelagerten Getriebewelle angeordnet sein.

Bei dieser Ausgestaltung ist es denkbar, das Zahnrad an der Getriebewelle anzuformen. Es ist jedoch auch möglich, das Zahnrad - analog zur Anordnung auf der Pumpenwelle - kraft- und/oder formschlüssig auf der Getriebewelle zu befestigen. Diese Befestigung kann z. B. mittels einer Steckverzahnung ausgeführt werden.

Eine im Hinblick auf einen einfachen Aufbau besonders günstige Weiterbildung der Erfindung sieht vor, dass das Untersetzungsgetriebe in ein Lagerschild des Antriebsmotors integriert ist.

Das Lagerschild ist zweckmäßigerweise mit einer Aufnahme für einen Zentrierflansch der Pumpe versehen.

Sofern die Aufnahme über einen Öffnungsquerschnitt verfügt, der größer ist als der Außendurchmesser des Zahnrads, kann bei der oben beschriebenen Ausgestaltung, bei der das Zahnrad auf der Pumpenwelle angeordnet ist, die Pumpe mit montiertem Zahnrad an das Lagerschild des Antriebsmotors montiert werden und ohne vorherige Demontage des Zahnrades wieder vom Antriebsmotor getrennt werden.

Bei der Ausgestaltung mit separater Getriebewelle wird das Lagerschild des Antriebsmotors so modifiziert, dass eine beidseitige Lagerung der Getriebewelle möglich ist.

Der Antrieb ist gemäß einer Ausgestaltung der Erfindung als Elektromotor, insbesondere Drehstrommotor, ausgebildet.

Ein bevorzugter Einsatzbereich der erfindungsgemäßen Antriebsanordnung sind Flurförderzeuge. Hierbei ist zweckmäßigerweise die Pumpe an eine Hubhydraulik eines Flurförderzeugs angeschlossen.

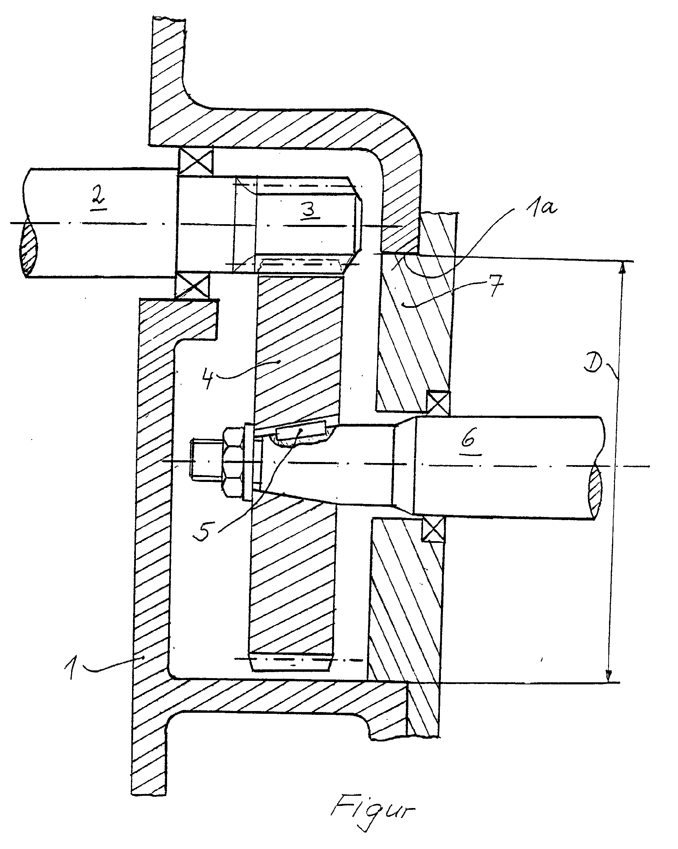

Weitere Vorteile und Einzelheiten der Erfindung werden anhand des in der Figur schematisch dargestellten Ausführungsbeispiels näher erläutert. Die Figur zeigt ein Untersetzungsgetriebe, das zwischen einen Antriebsmotor und eine hydraulische Pumpe geschaltet ist. Die aus dem Antriebsmotor, dem Untersetzungsgetriebe und der Pumpe gebildete Antriebsanordnung ist bevorzugt für die Hubhydraulik eines Flurförderzeugs vorgesehen.

Das als Stirnradgetriebe ausgebildete Untersetzungsgetriebe ist in ein Lagerschild 1 des Antriebsmotors integriert. An einer Motorwelle 2 des Antriebsmotors, der z. B. als schnelllaufende Drehstrom-Asynchronmaschine ausgebildet sein kann, ist ein Ritzel 3 angeformt, das mit einem Zahnrad 4 kämmt, welches mittels einer Passfeder-Verbindung 5 mit einer Pumpenwelle 6 der Pumpe drehsynchron verbunden ist.

Das Lagerschild 1 ist mit einer Aufnahme 1a für einen Zentrierflansch 7 der Pumpe versehen. Der Öffnungsquerschnitt D der Aufnahme 1a übersteigt den Außendurchmesser des Zahnrades 4, so dass die Pumpe samt Pumpenwelle 6 und Zahnrad 4 an das Lagerschild 1 angebaut oder von diesem entfernt werden kann.

Durch das Untersetzungsgetriebe kann das Drehzahlniveau der Pumpe auf ein Niveau gebracht werden, bei dem die Geräuschemissionen akzeptabel sind. Die gewünschte Förderleistung wird durch entsprechende Dimensionierung des Fördervolumens der Pumpe erzielt. Gleichzeitig können durch eine hohe Drehzahl des Antriebsmotors dessen Abmessungen verringert werden. Insgesamt ist eine hohe Leistungsdichte der erfindungsgemäßen Antriebseinheit und damit ein kleiner Bauraum erzielbar.

## Patentansprüche

1. Antriebsanordnung mit einer hydraulischen Pumpe und einem Antriebsmotor, **dadurch gekennzeichnet, dass** zwischen den Antriebsmotor und die Pumpe ein Untersetzungsgetriebe geschaltet ist.

2. Antriebsanordnung nach Anspruch 1, **dadurch gekennzeichnet, dass** das Untersetzungsgetriebe als Stirnradgetriebe mit einem Ritzel (3) und einem damit in Eingriff stehenden Zahnrad (4) ausgebildet ist, wobei das Ritzel (3) mit einer Motorwelle (2) des Antriebsmotors und das Zahnrad (4) mit einer Pumpenwelle (6) der Pumpe verbunden ist.

3. Antriebsanordnung nach Anspruch 2, **dadurch gekennzeichnet, dass** das Ritzel (3) an der Motorwelle (2) angeformt ist.

4. Antriebsanordnung nach Anspruch 2, **dadurch gekennzeichnet, dass** das Ritzel (3) und die Motorwelle (2) als separate Bauteile ausgebildet sind.

5. Antriebsanordnung nach einem der Ansprüche 2 bis 4, **dadurch gekennzeichnet, dass** das Zahnrad (4) auf der Pumpenwelle (6) kraft- und/oder formschlüssig befestigbar ist.

6. Antriebsanordnung nach einem der Ansprüche 2 bis 4, **dadurch gekennzeichnet, dass** das Zahnrad (4) auf einer separaten, beidseitig gelagerten Getriebewelle angeordnet ist.

7. Antriebsanordnung nach Anspruch 6, **dadurch gekennzeichnet, dass** das Zahnrad (4) kraft- und/oder formschlüssig auf der Getriebewelle befestigbar ist.

8. Antriebsanordnung nach einem der Ansprüche 1 bis 7, **dadurch gekennzeichnet, dass** das Untersetzungsgetriebe in ein Lagerschild (1) des Antriebsmotors integriert ist.

9. Antriebsanordnung nach Anspruch 8, **dadurch gekennzeichnet, dass** das Lagerschild (1) mit einer Aufnahme (1a) für einen Zentrierflansch (7) der Pumpe versehen ist.

10. Antriebsanordnung nach Anspruch 9, **dadurch gekennzeichnet, dass** die Aufnahme (1a) über einen Öffnungsquerschnitt (D) verfügt, der größer ist als der Außendurchmesser des Zahnrads (4).

11. Antriebsanordnung nach einem der Ansprüche 1 bis 10, **dadurch gekennzeichnet, dass** der Antriebsmotor als Elektromotor, insbesondere Drehstrommotor, ausgebildet ist.

12. Antriebsanordnung nach einem der Ansprüche 1 bis 11, **dadurch gekennzeichnet, dass** die Pumpe an eine Hubhydraulik eines Flurförderzeugs angeschlossen ist.
